# EUROPEAN PATENT SPECIFICATION

(11) **EP 3 715 748 B1**
(45) Date of publication and mention of the grant of the patent: **23.11.2022**
(21) Application number: 19166205.5
(22) Date of filing: 29.03.2019
(51) Int. Cl.: F25B 30/02, F24D 3/08, F24D 3/18, F24D 11/02, F25B 49/02, F28D 20/00, F24D 19/10

(54) **METHOD FOR OPERATING A HEAT PUMP SYSTEM AND HEAT PUMP SYSTEM**
VERFAHREN ZUM BETREIBEN EINES WÄRMEPUMPENSYSTEMS UND WÄRMEPUMPENSYSTEM
PROCÉDÉ DE FONCTIONNEMENT D'UN SYSTÈME DE POMPE À CHALEUR ET SYSTÈME DE POMPE À CHALEUR

(43) Date of publication of application: 30.09.2020
(73) Proprietor: Mitsubishi Electric Corporation, Tokyo 100-8310 (JP); Mitsubishi Electric R&D Centre Europe B.V., Livingston EH54 5DJ (GB)
(72) Inventor: WU, Duan, Livingston, EH54 5DJ (GB); SALVADOR, Michael, Livingston, EH54 5DJ (GB)
(74) Representative: Pfenning, Meinig & Partner mbB

(56) References cited:
- EP-A1- 3 252 382
- EP-A2- 2 629 020
- WO-A1-2017/004406
- US-A1- 2011 030 753

## Description

### Field

The invention relates to a method for operating a heat pump system and the heat pump system, adopting this method, wherein the operating method comprises steps of determining operating modes of the heat pump system.

### Background

Energy consumption in buildings is regarded as a major source of CO2 emissions. In recent years Zero Energy Houses (ZEH) have become popular because of the purpose of decarbonization in home appliance sectors. Heat pumps are a preferred solution for supplying space heating and water heating due to their renewable nature. One important performance factor is the coefficient of performance, COP, of a heat pump system which is a ratio of useful heating or cooling provided to work required. If a value of COP during the operation of a heat pump system is maintained high, it means that the heat pump system has high efficiency.

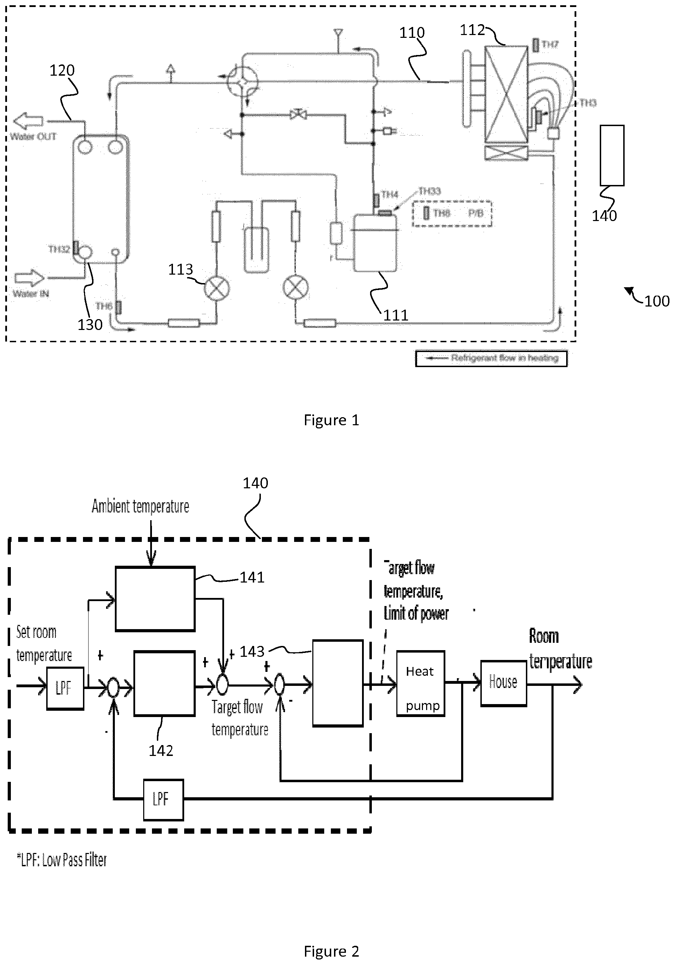

Fig. 1 shows a configuration of diagram of a conventional heat pump system 100. The heat pump system 100 comprises a refrigerant circuit 110, a heat medium circuit 120, a sheet-type heat exchanger 130 connected with the refrigerant circuit 110 and the heat medium circuit 120, and a control element 140. A source air-refrigerant heat exchanger 112, a compressor 111, the heat exchanger 130, and an expansion valve 113 are connected sequentially via refrigerant conduits.

During a heating operation of the heat pump system 100, refrigerant in a liquid phase with low pressure passes through the source air-refrigerant heat exchanger 112 working as an evaporator so as to absorb heat from ambient air. Next, the refrigerant is guided to flow into the compressor 111 and then to the heat exchanger 130 as a condenser so that the refrigerant transfers heat to the heat medium of the heat medium circuit 120 in the heat exchanger 130. The refrigerant after transferring heat is guided to the expansion valve 113 to result in a decrease in pressure.

In the above-mentioned heating operation the speed of the compressor 111 and the opening degree of the expansion valve 113 are controlled by the control element 140 so that the temperature of the heat medium heated in the heat exchanger 130 and flowing out from the heat exchanger 130 reaches a given target flow temperature. Here, the target flow temperature is determined by a temperature requested by a heating unit, or a water requested temperature to heat the water stored in a water thermal storage tank. In the following description, the above-mentioned room temperature requested by the heating unit and the water requested temperature may be described as a set temperature.

In the above mentioned configuration of the heat pump system 100, the control element 140 is electrically coupled with relevant components so as to control them. Here a number of temperature sensors and/or pressure sensor not shown in fig. 1 are arranged in locations of which vary on a basis of actual demands. The control element 140 therefore controls the operation based on the measured data and built-in instructions.

Fig. 2 shows a functional diagram of a feed-forward control and a feed-back control of the conventional heat pump system for a target temperature control. The control element 140 comprises a feed forward control means 141, a feedback control means 142, and a power save control means 143. Firstly, a live room temperature (or a water temperature) and an ambient temperature are measured by corresponding temperature sensors and then sent to the control element 140. The feed forward control means 141 and the feedback control means 142 are configured to obtain the target flow temperature based on the set temperature and the measured ambient air temperature. Further, the power save control means 143 is configured to obtain a value of power demand based on the target flow temperature and input this value to control the heat operation.

However, the heat pump system 100 becomes oversized when working at a low heat load. Especially, a low heat load of the heat pump system 100 may be caused by reaching a set temperature in particular to a tight and well-insulated room.

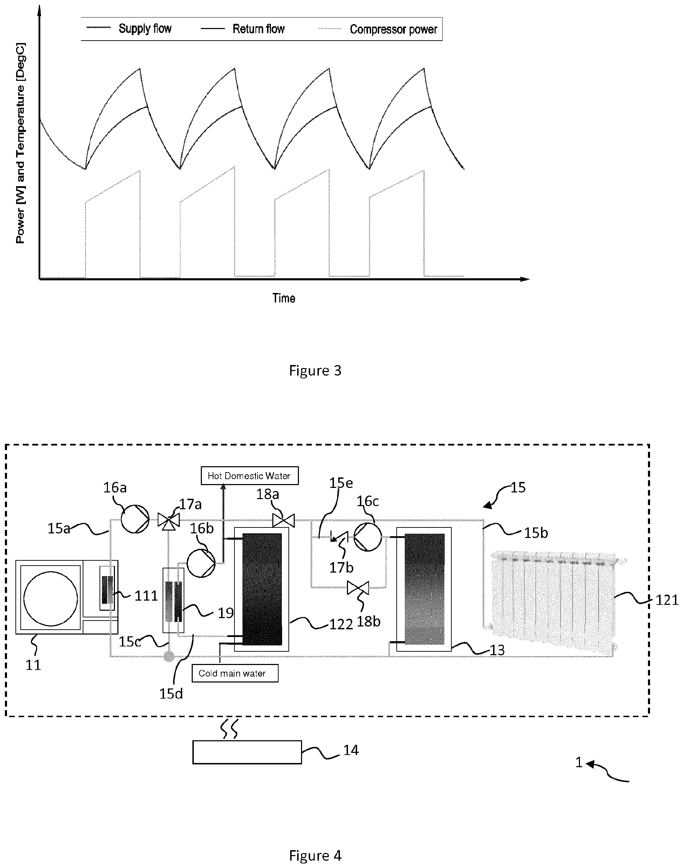

Fig. 3 shows flow temperature fluctuations and power fluctuations by frequently performed on-off cycling operations. A curve line in an uppermost location in fig. 3 represents a temperature fluctuation of a supply flow of the heat medium, a curve line in a middle location in fig. 3 represents a temperature fluctuation of a return flow of the heat medium, and a curve line in a lowermost location represents a power consumption of the heat pump system 100. Therein the term "a supply flow of the heat medium" means that the heat medium flows to supply heat, and the term "a return flow of the heat medium" means that the heat medium flows after supplying heat. The above mentioned situation results in the heat pump system 100 frequently switching on and off. As a result, the lifetime of the heat pump system 100 is reduced, and the efficiency is deteriorated. Moreover, it is very difficult to achieve maximum COP under different conditions of ambient temperature and target flow temperature, where the target flow temperature is computed directly from a conventional heat curve method.

On the other hand, in order to reach a maximum COP, the value of demanded power is chosen further on the basis of a heat pump performance table built into the control element 140. However, with regard to the same ambient temperature, it is possible that the heat load for the maximum COP is more than a demand heat load for the target flow temperature. As a result, a room temperature or a water temperature achieved via the heat operations easily exceeds the set temperature.

EP 3 252 382 A1 discloses an apparatus for heating a target space heating circuit and a target water supply circuit comprising a heat pump unit, a boiler, a heat source control means determining the heat pump unit and the boiler as a heat source for heating, a target space or a target water tank on the basis of a coefficient of performance of the heat pump unit and a break even coefficient of performance.

US 2011/030753 A discloses a power generation system comprising a stirling engine, a thermal storage, and a control means for determining one of the stirling engine as a heat pump and the thermal storage for a space/water heating operation.

### Summary

It is therefore the problem to be solved by the present invention to enhance efficiency of a heat pump system and achieve desired temperatures under different environmental conditions.

This problem is solved by the method for operating a heat pump system according to claim 1 as well as by the heat pump system according to claim 9.

The present invention relates to a method for operating a heat pump system. The method according to the invention can in principle be applied to a kind of heat pump system comprising all the required features. In general, the heat pump system comprises a heat pump, at least one heating element, a heat storage element, a control element, and a heat medium circuit connecting the heat pump, the at least one heating element, and the heat storage element. Preferably, the at least one heating element can for example be a radiator. The radiator can transfer heat between heat medium and air, or between heat medium and water. Further, the control element is coupled, e.g. electrically, with the heat pump, the at least one heating element, the heat storage element so as to control each element. Here the term "heat pump" shall stand for a device heating an indoor room as well as a device for heating a medium.

The method of the present invention, defined by appended independent claim 1, comprises steps performed by the control element. Here the control element determines a current performance of the heat pump. The term "performance" can for example be one of coefficient of performance COP, power rate, flow temperature of heat medium, and compressor frequency of the heat pump. Further, the control element compares the current performance to a stored performance, and chooses an operating mode of the heat pump and an operating mode of the heat storage element according to a result of the comparing of the current performance to the stored performance. Preferably, the stored performance is stored in a table. Further, the control element stores the current performance as a new stored performance if the current performance differs from the stored performance by an amount larger than a predetermined threshold.

The control element, if the current performance differs from the stored performance, e.g. by an amount larger than the predetermined threshold, adjusts the operating mode of the heat pump, and if the current performance differs from the stored performance by an amount smaller than a predetermined threshold, can maintain the current operating mode of the heat pump. Preferably, the predetermined threshold can be a value or a range. The range, for example, can be 5% of the difference between the current performance and the stored performance.

The control element stores the current performance as a new stored performance if the current performance differs from the stored performance by an amount larger than a predetermined threshold.

Preferably, the control element determines a current storage level of the heat storage element, and chooses the operating mode further based on the current storage level of the storage element. That is, a selection for the operating mode of the heat storage element and a selection for the operating mode of the heating storage element may further depend on the current storage level of the storage element. The current storage level of the storage element can be further defined by comparing with heat provided by the heat pump operating at the maximum COP power rate more than 1 hour.

Preferably, the control element can determine a Heat demand. The Heat demand can for example be computed based on the current outdoor temperature, a current temperature of the heat medium, and a target temperature of the heat medium. In addition to the determining of the Heat demand, the control element can choose the operating mode further based on the Heat demand.

In a preferred embodiment of the invention, the heat pump can be rightsized. Here the heat pump is sized on a building according to a design temperature. For example, if the heat pump has a capacity of 5 Kilowatt (kW), and at an outdoor temperature of -5 Celsius the building has thermal losses of 5 kW, then the heat pump is rightsiyed for -5 Celsius for the particular building. The capacity of the heat pump depends on the indoor temperature. That is, the lower the outside temperature is, the lower is the capacity of the heat pump. For example, if the heat pump is designed for a particular building for -5 Celsius, it is rightsized when the temperature is over -5 Celsius, and versa vice it is oversized when the temperature is equal to -5 Celsius. In this embodiment, the control element can preferably choose the operating mode of the heat pump and the heat storage element depending on the storage level of the heat storage element and the Heat demand according to the following table:

| **Current storage level of the heat storage element** | **Heat demand** | **operating mode of the storage element** | **operating mode of the heat pump** |
|---|---|---|---|
| Full | higher than Q_{HP} | supply heat | heating optimal |
| Full | equal to Q_{HP} | supply heat | standby |
| Full | smaller than Q_{HP} | supply heat | standby |
| Full | None | standby | standby |
| partially filled | higher than Q_{HP} | supply heat | maintain operating mode |
| partially filled | equal to Q_{HP} | standby | heating optimal |
| partially filled | smaller than Q_{HP} | store heat | heating optimal |
| partially filled | None | store heat | heating optimal |
| Depleted | higher than Q_{HP} | standby | maintain operating mode |
| Depleted | equal to Q_{HP} | standby | maintain operating mode |
| Depleted | smaller than Q_{HP} | store heat | heating optimal |
| Depleted | None | store heat | heating optimal |

Therein the heat storage element can be considered full if it contains an amount of heat greater than a maximum heat amount which can be stored in the heat storage element minus the smallest heat amount greater than zero which the heat pump can deliver over a certain time. The certain time can for example be 1 minute, or 10 minutes, or 1 hour. Preferably, the certain time can be 1 hour.

Here Q_{HP} is the heat rate delivered by the heat pump in an operating mode with maximum COP. In this embodiment, the heat storage element in the "supply heat" operating mode supplies heat to the heat medium circuit, in the "standby" mode neither supplies nor draws heat from the heat medium circuit, and in the "store heat" mode draws heat from the heat medium circuit.

In this embodiment, the heat pump in the "heating optimal" mode operates at a performance which has a maximum COP, in the "maintain operating mode" maintains its current operation, and in the "standby" mode is inoperational.

In a further optimal embodiment of the invention the heat pump can be oversized. In this embodiment, the control element can choose the operating mode of the heat pump and the heat storage element depending on the storage level of the heat storage element and the Heat demand according to the following table:

| **Current storage level of the heat storage element** | **Heat demand** | **operating mode of the storage element** | **operating mode of the heat pump** |
|---|---|---|---|
| full | higher than Q_{HP} | supply heat | heating optimal |
| full | equal to Q_{HP} | supply heat | standby |
| full | smaller than Q_{HP} | supply heat | standby |
| full | None | standby | standby |
| partially filled | higher than Q_{HP} | supply heat | heating optimal |
| partially filled | equal to Q_{HP} | standby | heating optimal |
| partially filled | smaller than Q_{HP} | store heat | heating optimal |
| partially filled | None | store heat | heating optimal |
| depleted | higher than Q_{HP} | standby | maintain operating mode |
| depleted | equal to Q_{HP} | standby | heating optimal |
| depleted | smaller than Q_{HP} | store heat | heating optimal |
| depleted | none | store heat | heating optimal |

Therein the heat storage element can be considered full if it contains an amount of heat greater than a maximum heat amount which can be stored in the heat storage element minus the smallest heat amount greater than zero which the heat pump can deliver over a certain time. The certain time can for example be 1 minute, or 10 minutes, or 1 hour. Preferably, the certain time can be 1 hour. Here Q_{HP} is the heat rate delivered by the heat pump in an operating mode with maximum COP. In this embodiment, the heat storage element in the "supply heat" operating mode supplies heat to the heat medium circuit, in the "standby" mode neither supplies nor draws heat from the heat medium circuit, and in the "store heat" mode draws heat from the heat medium circuit.

In this embodiment, the heat pump in the "heating optimal" mode operates at a performance which has a maximum COP, in the "maintain operating mode" maintains its current operation, and in the "standby" mode is inoperational.

Preferably, the control element can perform the steps of determining a current performance of the heat pump, comparing the current performance to a stored performance, and choosing an operating mode of the heat pump and an operating mode of the heat storage element according to a result of the comparing the current performance to the stored performance at predetermined time intervals.

The present invention furthermore relates to a heat pump system comprising a heat pump, at least one heating element, a heat storage element, a heat medium circuit connecting the heat pump, the at least heat element, and the heat storage element, and a control element. The control element is configured to determine a current performance of the heat pump, to compare the current performance to a stored performance, and choose an operating mode of the heat pump and the heat storage element according to a result of the comparing of the current performance to the stored performance, and to store the current performance as a new stored performance if the current performance differs from the stored performance by an amount larger than the predetermined threshold.

Preferably, the heat storage element can comprise a phase change material, PCM, or be a water based thermal storage. The phase change material, for example, can be a latent heat material.

It is particularly preferred if the heat pump system is configured to carry out a method as described above, where however the heat pump system is at least configured as defined in appended independent claim 9.

The method of the present invention for operating the heat pump system can control both the heat pump and the heat storage element to achieve the best overall energy efficiency. That is, the method of the present invention maintains the maximum COP performance during operation in any given set of conditions, e.g. installation, climate, heating circuit design, occupants, etc. The present invention thus provides a method for operating heat pump system capable of improving high efficiency under a desired temperature.

In the following the invention will be described by way of examples with reference to figures. The features described in the context of the examples can also be realized independently from the specific example.
Figure 1 shows a configuration diagram of a conventional heat pump system.
Figure 2 shows a functional diagram of a feed-forward control and a feed-back control of the conventional heat pump system for a target temperature control.
Figure 3 shows flow temperature fluctuations and power fluctuations by frequently performed on-off cycling operations.
Figure 4 shows a configuration diagram of a heat pump system according to Embodiment 1.
Figure 5 shows a configuration diagram of a heat pump system according to Embodiment 2.
Figure 6 shows an example main flow chart of a process to be performed by a method for operating the heat pump system of the present invention.
Figure 7 shows a flow chart of the step of calculating a current storage level according to the current heat pump capacity.
Figure 8 shows a flow chart of updating the COP table of the heat pump of the method.
Figure 9 shows a flow chart of tracking the maximum COP of the heat pump of the method.
Fig. 10 shows a flow chart of the step of calculating heat demand of the method of the present invention.
Figure 11 shows a flow chart of controlling the rightsized heat pump with MAXCOP.
Figure 12 shows a flow chart of controlling the oversized heat pump with MAXCOP.
Figure 13 shows a flow chart of controlling the heat storage element.

### Description of Embodiments

In the following detailed description, for purpose of explanation, numerous specific details are set forth in order to provide a thorough understanding of the disclosed embodiments.

Fig. 4 shows a configuration diagram of a heat pump system according to a preferred embodiment. In this embodiment, a heat pump system 1 comprises a heat pump 11, a heating element 121, a water heating element 122, a heating storage element 13, a heat medium circuit 15, and a control element 14. The heat medium circuit 15 connects to the heat pump 11, the heating element 121, the water heating element 122, and the heating storage element 13 in parallel on the heat medium circuit 15 by heat medium conduits 15a, 15b, 15c, 15d, 15e, 15f. The heating storage element 13 is a water-based thermal storage, for example, a domestic water tank. In addition, heat medium in the heat medium circuit 15 is water and the heating element 121 is a radiator.

The heat pump 11 comprises a refrigerant circuit not shown in which, e.g., a source air-refrigerant heat exchanger 111, an expansion valve, a refrigerant-heat medium heat exchanger, and a compressor are connected to each other in series by refrigerant conduits. Via the refrigerant-heat medium heat exchanger 111, a heat transition is utilized between refrigerant in the refrigerant circuit and the heat medium in the heat medium circuit 15. Herein the refrigerant may be R410a, or CO₂, or other heat transfer fluid.

Moreover, a number of temperature sensors not shown in the fig. 4 are arranged in different locations to detect ambient temperature, heat medium temperature, room temperature, and water heating temperature. As a result, the control element 14 is configured to receive the measured temperature from the number of temperature sensors.

Further, the configuration of the heat pump system 1 is further described as follows. The refrigerant-heat medium heat exchanger 111, a heat medium pump 16a and a three way valve 17a are connected sequentially via the conduit 15a. The pump 16a is arranged to guide the heat medium flowing out from the heat exchanger 111 to the three way valve 17a. The three way valve 17 at the upper end of the conduit 15a is connected to the conduit 15b and the bypass conduit 15c to control a flow direction of the heat medium. Therein both ends of the bypass conduit 15c are correspondingly connected to the upper end and a lower end of the conduit 15a. Likewise, both ends of the conduit 15b are correspondingly connected to the upper end and the lower end of the conduit 15a. The heating element 121 for heating space is arranged in the conduit 15b. A heat medium-water heat exchanger 19 is connected to the three way valve 17a via the bypass conduit 15c and to a pump 16b and the water heat element 122 sequentially via the loop-type conduit 15d through which water from the water heat element 122 flows. Accordingly, A heat transfer is generated from the heat medium of the bypass conduit 15c passing through the heat exchanger 19 to the water of the conduit 15d through the heat exchanger 19. Therein the pump 16b is arranged to guide the water flowing out of the heat exchanger 19.

The heating storage element 13 located in the loop-type conduit 15e is set to receive heat from the heat medium or provide heat to the heat medium, wherein two ends of the loop-type conduit 15e are corresponding connected to an upper part of the conduit 15b and an lower part of the conduit 15b in fig. 4. Further, a solenoid valve 17b and a pump 16c are arranged in series in an upper part of the loop-type conduit 15e, and a two-way valve 18b is arranged in a lower part of the loop-type conduit 15e. The solenoid valve 17b is set to control the flow rate of the heat medium, the pump 16c is set to guide the heat medium flowing out from the heating storage element 13, and the two-way valve 18b is set to control the flow direction of the heat medium. The heating storage element 13 via the above configuration can thus implement to operating modes "stand by", "store heat", and "supply heat" in the heat pump system.

In addition, a two way valve 18a located in the upper part of the conduit 15b is arranged between the three way valve 17a and the heating element 121. The valve 18a is set to further control the flow direction of the heat medium flowing through the upper part of the conduit 15b. Based on the configuration of the heat pump systems 1, the_control element 14 can further perform control of the pumps 16a, 16b, 16c and the valves 17a, 17b 18a, 18b to accurately control the operation of the heat pump systems 1.

Furthermore, in this embodiment and according to the invention, the control element 14 is configured to determine a current performance of the heat pump 11, to compare the current performance to a stored performance and choose an operating mode of the heat pump 11 and the heat storage element 13 according to a result of the comparing of the current performance to the stored performance. The term "performance" can for example represent one of coefficient of performance COP, power rate, flow temperature of heat medium, and compressor frequency of the heat pump. In this embodiment, the term "performance" can represent "coefficient of performance".

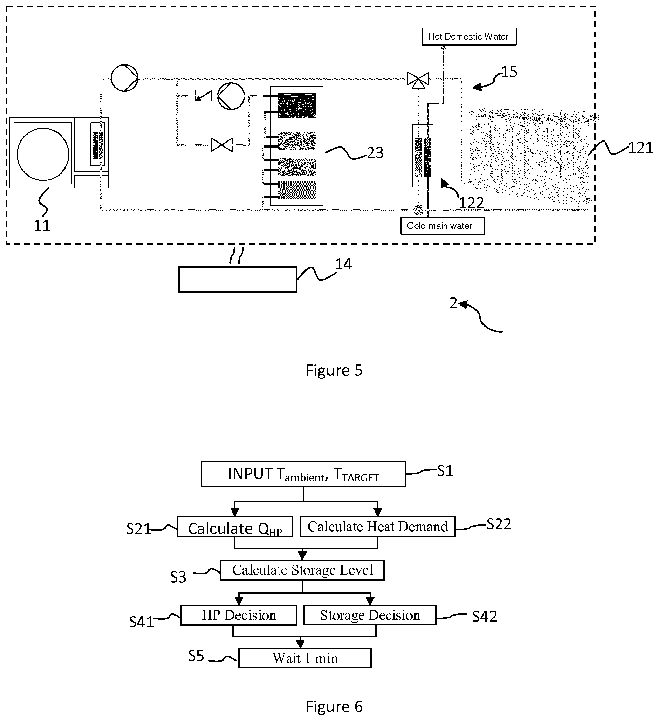

Fig. 5 shows a configuration diagram of a heat pump system according to Embodiment 2. In comparison with the configuration of the heat pump system of Embodiment 1, the only difference is that a heating storage element 23 in a heat pump system 2 of Embodiment 2 comprises a phase change material in a multiple-layers structure. The heat of transition between the phase change material and heat medium passes through the heating storage element 23 is easily utilized.

In these above embodiments, the control element 14 can obtain the heat demand of a set temperature, i.e. a room temperature requested by the heating unit or a water requested temperature, e.g. in a conventional heat curve method. As shown in Table 1, a heat demand can be obtained in the conventional heat curve method while an ambient temperature and a target flow temperature of the heat medium are measured. For example, when the ambient temperature (Tambient) is 2°C, and the target flow temperature (Tflow) is 42°C, the power rate corresponding to the demand heat (Qdemand) will be 3.23 kW when the room temperature set point is 21°C.

**Table. 1 Heat demand according to a heat curve method.**

| Tambient **[°C]** | Tflow **[°C]** | Qdemand [kW] **(Tₛₚ** = **21°C)** |
|---|---|---|
| 15 | 23.55 | 1.02 |
| 12 | 27.84 | 1.53 |
| 7 | 34.99 | 2.38 |
| 2 | 42.14 | 3.23 |
| -7 | 55.01 | 4.76 |
| -10 | 59.3 | 5.27 |

Moreover, in these above embodiments, a heat pump performance table, i.e. Table 2, can be stored in the control element 14. In general, data of heat pump performance are usually published in the databook/datasheet, and normally obtained from standard tests, such as specified in EN14511.

In order to achieve the best performance of the heat pump, the control element 14 can further choose a heat demand based on the best value of the stored performance. For example, as shown in Table 1 and 2, if the control element 14 performs achieving a maximum performance with regard to the target flow temperature at 42°C and the demanded power rate of 3,23kW, the maximum COP will be choose at 3.35 with the power rate at 3,45kW corresponding to the heat demand. Further, if the heat pump operates with the maximum COP, it is possible that the heat supply indeed exceeds the heat demand. Under this situation, the control element 14 further controls the heat pump system to allocate an amount of the heat supply to be transferred to the heating element 12 and a heating storage element 13, 23. The operating mode of the heating element and the operating mode of a heating storage element are described in detail in the following contents.

**Table. 2 Operational points of heat pump under same ambient temperature.**

| Tair **[°C]** | T_{flow} **[°C]** | Q[kW] | COP |
|---|---|---|---|
| 2 | 40 | 2.95 | 3.23 |
| 2 | 45 | 3.17 | 2.86 |
| 2 | 40 | 3.45 | 3.35 |
| 2 | 45 | 3.68 | 3.15 |
| 2 | 40 | 5.00 | 3.15 |
| 2 | 45 | 5.00 | 2.80 |

The following control modes can be applied to the configuration of the heat pump system of the above two embodiments.

Fig. 6 shows an example main flow chart of a process to be performed by a method for operating the heat pump system of the present invention. While a set temperature, a room temperature requested by the heating unit, or a water heating temperature, is set, a step S1 is carried out to input an ambient temperature and a target flow temperature of the heat medium to the control element 14. The ambient temperature is measured by one of temperature sensors and input to the control element 14, and the target flow temperature of the heat medium is obtained from a conventional heat curve method according to the ambient temperature and the set temperature. Next, a step S21 is to calculate a power rate of the heat pump at a maximum COP for a minimum running time, for example, an hour. Meanwhile, a step S22 is to calculate a heat demand for achieving the target flow temperature of the heat medium. Further, a step 3 is to calculate the current storage level of the storage element. Accordingly, a step S41 is to determine the operating mode of the heat pump, and a step S42 is to determine the operating mode of the heat storage element, respectively.

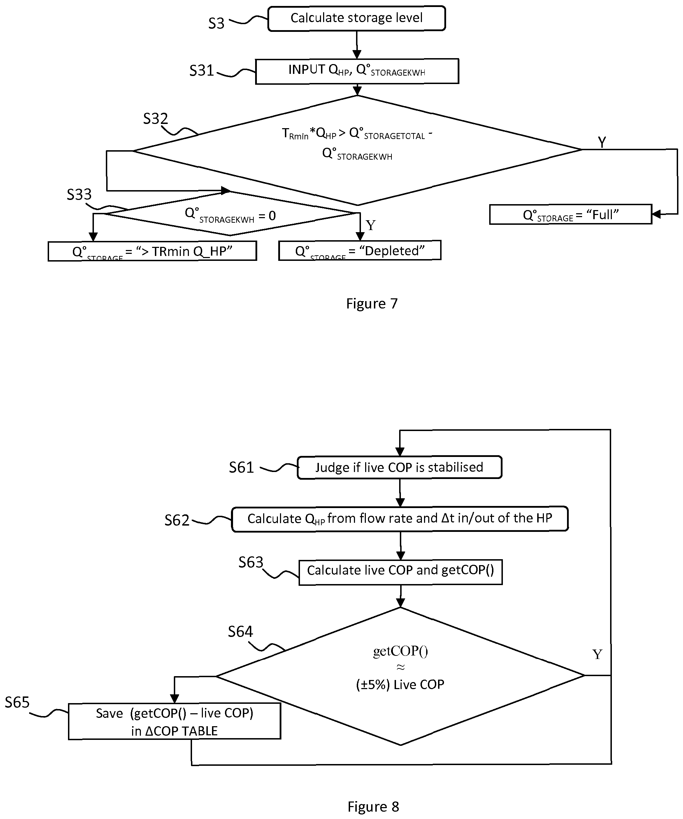

Moreover, fig. 7 shows a flow chart of the step S3 of calculating a current storage level according to the current heat pump capacity. The step S3 of calculating a current storage level of the heat storage element 13,23 is herein further specified. The current storage level of the storage element can be determined by comparing with Heat Q_{HP} provided by the heat pump operating at the maximum COP power rate at least a minimum time, for example, 1 hour. The current storage level of the heat storage element is calculated and recognized as one of the levels "full", "more than T_{Rmin} Q_{_HP}", and "depleted" by the control element.

Firstly, as shown in fig. 7, the main step 31 of calculating storage level is executed by the control element 14. Next, a step 31 is to input Q_{HP}, and an current amount of heat Q°_{STORAGEKWH} stored in the heat storage element 13,23. Further, a step S32 is to determine whether an equation "T_{Rmin}∗Q_{HP}> Q°_{STORAGETOTAL} - Q°_{STORAGEKWH}" is true. In the step S32, the term "T_{Rmin}^{∗}Q_{HP}" is the Heat provided by the heat pump operating at the maximum COP power rate at least a minimum time , Q°_{STORAGETOTAL} is the heat capacity of the heat storage element 13,23. If the equation in the step 31 is true, the current storage level of the heat storage element 13,23 is recognized as the level "full", and versa vice, the control element 14 advances the processing to a step S33. The step S33 is to determine whether Q°_{STORAGETOTAL} is zero. When Q°_{STORAGETOTAL} is zero, the current storage level of the heat storage element 13,23 is recognized as the level "Depleted", and versa vice, it is recognized as the level "more than T_{Rmin} Q_{_HP}".

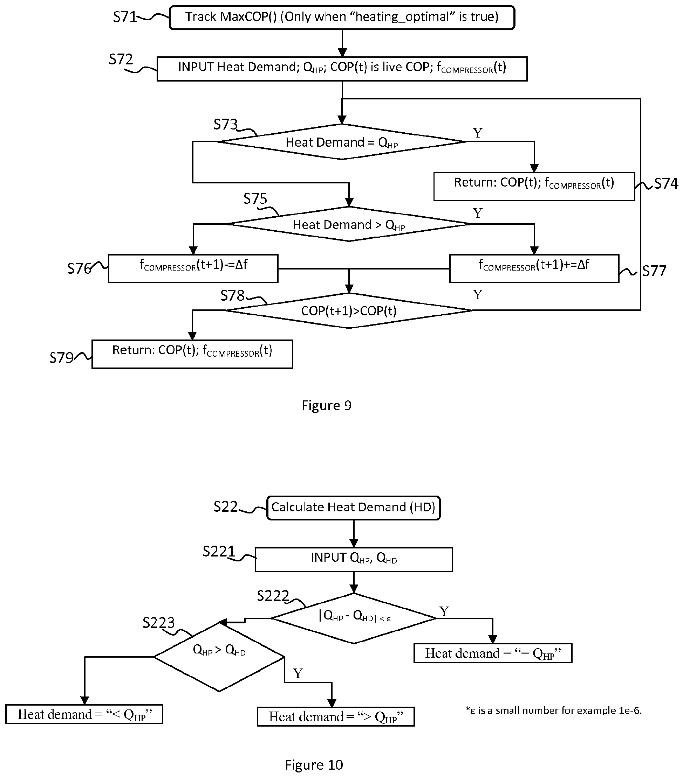

Furthermore, in order to maximize the COP during the operation of the heat pump, fig. 8 shows a flow chart of updating the COP table of the method, and fig. 9 shows a flow chart of tracking the maximum COP of the method.

Moreover, in these above embodiments, a heat pump performance table, i.e. Table 2, can be stored in the control element 14. In general, data of heat pump performance are usually published in the databook/datasheet, and normally obtained from standard tests, such as specified in EN14511.

Further, fig. 8 shows a flow chart of updating the COP table of the method. A COP table means the performance table of the heat pump given by the heat pump manufacturer obtained from standard tests. Herein table 2 can be the heat pump performance table stored in the control element 14 to be applied in updating the COP table in the fig. 8.

In fig. 8 the flow chart of updating the COP table is executed by the control element 14 when the heat pump 11 of the heat pump system operates. A step S61 is to judge if live COP is stabilized in an operation of heat pump 11, such as a heat operation. When live COP is stabilized, a step 62 is further processed to calculate Q_{HP} on the basis of the flow rate of heat medium, the temperature ΔT difference. Next, a step S63 is to calculate live COP and get COP () which a corresponding value of Max COP is stored in Table 2. Next, a step S64 is to judge whether the corresponding get COP () has difference within 5% of the live COP. If that is true, the control element returns the step S61. If no, a step S64 is to set a new table "Δ COPTABLE", and to save the difference between the corresponding get COP () and the live COP "get COP () - live COP" in the new table. The control element 11 after performing the step S65 returns the step S61.

To be more specific, the new table "ΔCOP TABLE" is a table for COP correction of the heat pump 11. This Table is specific to the heat pump system of the present invention as installed in a target building. Fruther, This table is generated while the heat pump system operates under the difference between COP TABLE and live COP greater than a defined threshold. The defined threshold can be a value or a range. In fig. 8, the defined threshold is 5% of the difference between the current performance and the stored performance. That is, when the difference between manufacturer performance data and live COP is greater than 5%, the live COP is saved to correct the manufacturer performance table.

Figure 9 shows a flow chart of tracking the COP table of the method. A step 71 is to confirm that If a heat operation of the heat pump with the MAX COP is tracked and confirmed as true. If the heat operation of the heat pump with the MAX COP is true in the step S71, a step 72 is processed to input Heat demand, a live COP COP(t) and a live frequency f_{compressor}(t) of compressor of the heat pump.

Further, the control element 14 performs the control steps S73, S74, S75, S76, S77, S78, S79 of the live frequency of the compressor based on the heat demand and the amount of heat Q_{HP} provided by the heat pump 11 operating at the maximum COP power rate. The step S73 is to judge whether the heat demand is equal to the amount of heat Q_{HP}. If that is true, the step S74 is processed to maintain the live COP "COP(t)" and the live frequency f_{compressor}(t) of compressor of the heat pump 11. If not, the step S75 is processed to judge whether the heat demand is greater than the amount of heat Q_{HP}. If that is true, the step S76 is processed to adjust the live frequency f_{compressor}(t) to increase in an amount of frequency at the next time interval(t+1). If not, the step S77 is processed to adjust the live frequency f_{compressor}(t) to increase in an amount of frequency of the compressor at the next time interval (t+1). The step S78 after the adjustment of both the steps of S77 and S78 is processed to judge whether a new live COP "COP(t+1)" is greater than the live COP "COP(t)". If that is true, the step 74 is returned and processed. If not, the step S79 is to return the value the live COP "COP(t)" and the live frequency f_{compressor}(t) of compressor of the heat pump 11.

Accordingly, the heat pump 11 daily linearizes the ΔCOP TABLE content in order to avoid gap effects and consider the real performance trend of the thermodynamic cycle.

Fig. 10 shows a flow chart of the step of calculating heat demand of the method of the present invention. The step S22 in fig. 6 which calculates the heat demand Q_{HD} is further specified by comparing the heat demand Q_{HD} to the amount of heat Q_{HP} by energy provided by the heat pump operating at the maximum COP power rate. The current statues of the heat demand Q_{HD} can be one of status "more than O_{HP}","equal to Q_{HP}", and "small than O_{HP}".

Next, the step S41 of determining of the operating mode of the heat pump and the step S42 of determining of the operating mode of the heat storage element in figure 1 are described in the following paragraphs.

The operating mode of the heat pump is further based on the sizing of the heat pump. Herein the heat pump is sized on a building according to a design temperature. For example, if the heat pump has a capacity of 5 Kilowatt (kW), and at an outdoor temperature of -5 Celsius the building has thermal losses of 5 kW, then the HP is rightsized for -5 Celsius for the particular building. The capacity of the heat pump depends on the indoor temperature. That is, the lower the outside temperature is, the lower is the capacity of the heat pump. For example, if the heat pump is designed for a particular building for -5 Celsius, it is oversized when the temperature is over -5 Celsius, and vice versa it is rightsized when the temperature is equal to -5 Celsius.

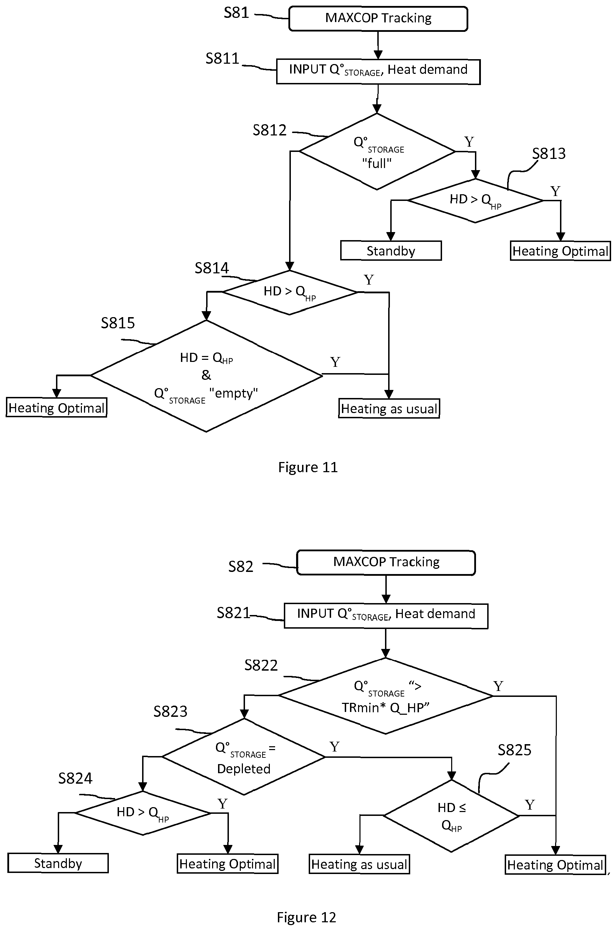

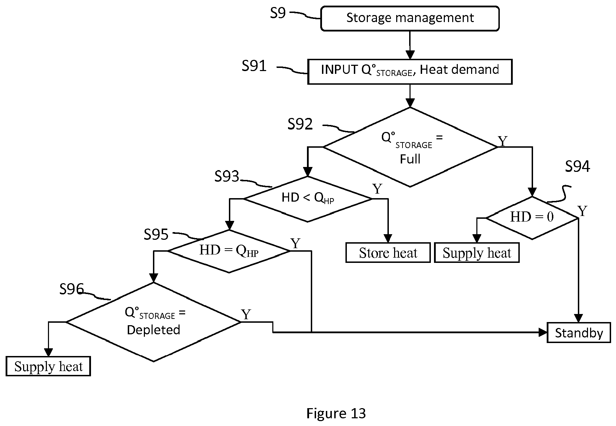

With regard to a rightsized heat pump, the operating mode of the heat pump and the operating mode of the heat storage element are managed by the heat pump control system as presented Table 3 and shown figs. 11 and 13. Figure 11 shows a flow chart of controlling the rightsized heat pump with MAXCOP, and Figure 13 shows a flow chart of controlling the heat storage element. Steps S81, S811, S812, S813, S814, and S815 shown in fig. 11 are performed by the control element 14 and correspond to the reference conditions of current storage level of the heat storage element 13,23 and the heat demand, and the operating mode of the heat pump 11. Steps S9, S91, S92, S93, S94, S95, and S96 shown in fig. 13 are performed by the control element 14 and correspond to the reference conditions of current storage level of the heat storage element 13,23 and the heat demand, and the operating modes of the heat storage element 13,23 in Table 3.

**Table 3 the control of the heat pump and the heat storage element in a rightsized heat pump**

| **Current storage level of the heat storage element** | **Heat demand** | **operating mode of the storage element** | **operating mode of the heat pump** |
|---|---|---|---|
| Full | higher than Q_{HP} | supply heat | heating optimal |
| Full | equal to Q_{HP} | supply heat | standby |
| Full | smaller than Q_{HP} | supply heat | standby |
| Full | None | standby | standby |
| partially filled | higher than Q_{HP} | supply heat | maintain operating mode |
| partially filled | equal to Q_{HP} | standby | heating optimal |
| partially filled | smaller than Q_{HP} | store heat | heating optimal |
| partially filled | None | store heat | heating optimal |
| Depleted | higher than Q_{HP} | standby | maintain operating mode |
| Depleted | equal to Q_{HP} | standby | maintain operating mode |
| Depleted | smaller than Q_{HP} | store heat | heating optimal |
| Depleted | None | store heat | heating optimal |

The storage element in the "supply heat" operating mode supplies heat to the heat medium circuit, in the "standby" mode neither supplies nor draws heat from the heat medium circuit, and in the "store heat" mode draws heat from the heat medium circuit. Further, the heat pump in the "heating optimal" mode operates at a performance which has a maximum COP, in the "maintain operating mode" maintains its current operation, and in the "standby" mode is inoperational.

The amount of storage in the heat storage element is preferably large if the heat pump is rightsized. The control element is set to never get a "Depleted" level for the storage by triggering the heat pump with maximum power rate earlier.

With regard to an oversized heat pump, the operating mode of the heat pump and the operating mode of the heat storage element are managed by the heat pump control system as presented Table 4 and shown figs. 12 and 13. Figure 12 shows a flow chart of controlling the oversized heat pump with MAXCOP, and Figure 13 shows a flow chart of controlling the heat storage element.

Steps S82, S821, S822, S823, S824, and S825 shown in fig. 12 are performed by the control element 14 and correspond to the reference conditions of current storage level of the heat storage element 13,23 and the heat demand, and the operating mode of the heat pump 11. Steps S9, S91, S92, S93, S94, S95, and S96 shown in fig. 13 are performed by the control element 14 and correspond to the reference conditions of current storage level of the heat storage element 13,23 and the heat demand, and the operating modes of the heat storage element 13,23 in Table 3.

**Table 4 the control of the heat pump and the heat storage element in an oversized heat pump**

| **Current storage level of the heat storage element** | **Heat demand** | **operating mode of the storage element** | **operating mode of the heat pump** |
|---|---|---|---|
| full | higher than Q_{HP} | supply heat | heating optimal |
| full | equal to Q_{HP} | supply heat | standby |
| full | smaller than Q_{HP} | supply heat | standby |
| full | None | standby | standby |
| partially filled | higher than Q_{HP} | supply heat | heating optimal |
| partially filled | equal to Q_{HP} | standby | heating optimal |
| partially filled | smaller than Q_{HP} | store heat | heating optimal |
| partially filled | None | store heat | heating optimal |
| depleted | higher than Q_{HP} | standby | maintain operating mode |
| depleted | equal to Q_{HP} | standby | heating optimal |
| depleted | smaller than Q_{HP} | store heat | heating optimal |
| depleted | none | store heat | heating optimal |

The amount of storage in the heat storage element is preferably small when the heat pump is oversized. The oversized heat pump will not rely on the storage device to guarantee a comfortable building. The control element is set to wait for a "Depleted" level before triggering the heat pump max power rate.

The method of the present invention for operating the heat pump system controls both the heat pump and the heat storage element, e.g. to achieve the best overall energy efficiency. That is, the method of the present invention maintains the maximum COP performance during operation in any given set of conditions, e.g. installation, climate, heating circuit design, occupants, etc.

The present invention thus provides a method for operating heat pump system capable of improving high efficiency under a desired temperature.

## Claims

1. Method for operating a heat pump system,
the heat pump system (1), comprising
a heat pump (11),
at least one heating element (121,122),
a heat storage element (13, 23),
a control element (14), and
a heat medium circuit (15), connecting the heat pump (11), the at least one heating element (121,122), and the heat storage element (13, 23), wherein the control element (14) determines a current performance of the heat pump (11),
compares the current performance to a stored performance, and chooses an operating mode of the heat pump (11) and an operating mode of the heat storage element (13, 23) according to a result of the comparing of the current performance to the stored performance, and wherein the control element (14) stores the current performance as a new stored performance if the current performance differs from the stored performance by an amount larger than a predetermined threshold.

2. Method for operating a heat pump system according to claim 1, wherein the control element (14) if the current performance differs from the stored performance by an amount larger than the predetermined threshold, adjusts the operating mode of the heat pump (11), and if the current performance differs from the stored performance by an amount smaller than the predetermined threshold, maintains the current operating mode of the heat pump (11).

3. Method for operating a heat pump system according to one of claims 1 to 2, wherein the current performance and the stored performance is each a coefficient of performance, COP, and
wherein the stored performance is preferably a maximum COP achievable with the heat pump (11).

4. Method for operating a heat pump system according to one of claims 1 to 3,
wherein the control element (14) determines a current storage level of the heat storage element (13, 23) and chooses the operating mode further based on the current storage level of the heat storage element (13, 23).

5. Method for operating a heat pump system according to any of the preceding claims,
wherein the control element (14) determines a heat demand (HD) and chooses the operating mode further based on the heat demand.

6. Method for operating a heat pump system according to claim 5,
wherein the heat pump (11) is right sized, and wherein the control element (14) chooses the operating mode of the heat pump (11) and the heat storage element (13,23) depending on the storage level of the heat storage element (13,23) and the heat demand according to the following table:
| **Current storage level of the heat storage element** | **Heat demand** | **operating mode of the storage element** | **operating mode of the heat pump** |
|---|---|---|---|
| full | higher than Q_{HP} | supply heat | heating optimal |
| full | equal to Q_{HP} | supply heat | standby |
| Full | smaller than Q_{HP} | supply heat | standby |
| Full | none | Standby | standby |
| partially filled | higher than Q_{HP} | supply heat | maintain operating mode |
| partially filled | equal to Q_{HP} | Standby | heating optimal |
| partially filled | smaller than Q_{HP} | store heat | heating optimal |
| partially filled | none | store heat | heating optimal |
| Depleted | higher than Q_{HP} | Standby | maintain operating mode |
| Depleted | equal to Q_{HP} | Standby | maintain operating mode |
| Depleted | smaller than Q_{HP} | store heat | heating optimal |
| Depleted | none | store heat | heating optimal |
wherein the heat storage element (13,23) is considered full if it contains an amount of heat greater than a maximum heat amount which can be stored in the heat storage element (13, 23) minus the smallest heat amount greater than zero which the heat pump (11) can deliver over a certain time,
and wherein Q_{HP} is the heat rate delivered by the heat pump (11) in an operating mode with maximum COP,
wherein further the heat storage element (13, 23) in the "supply heat" operating mode supplies heat to the heat medium circuit (15),
in the "standby" mode neither supplies nor draws heat from the heat medium circuit (15) and in the "store heat" mode draws heat from the heat medium circuit (15),
and wherein the heat pump (11) in the "heating optimal" mode operates at a performance which has a maximum COP, in the "maintain operating mode" maintains its current operation and in the "standby" mode is inoperational.

7. Method for operating a heat pump system according to claim 5,
wherein the heat pump (11) is oversized and wherein the control element (14) chooses the operating mode of the heat pump (11) and the heat storage element (13,23) depending on the storage level of the heat storage element (13,23) and the heat demand according to the following table:
| **Current storage level of the heat storage element** | **Heat demand** | **operating mode of the storage element** | **operating mode of the heat pump** |
|---|---|---|---|
| full | higher than Q_{HP} | supply heat | heating optimal |
| full | equal to Q_{HP} | supply heat | standby |
| full | smaller than Q_{HP} | supply heat | standby |
| full | none | standby | standby |
| partially filled | higher than Q_{HP} | supply heat | heating optimal |
| partially filled | equal to Q_{HP} | standby | heating optimal |
| partially filled | smaller than Q_{HP} | store heat | heating optimal |
| partially filled | none | store heat | heating optimal |
| depleted | higher than Q_{HP} | standby | maintain operating mode |
| depleted | equal to Q_{HP} | standby | heating optimal |
| depleted | smaller than Q_{HP} | store heat | heating optimal |
| depleted | none | store heat | heating optimal |
wherein the heat storage element (13,23) is considered full if it contains an amount of heat greater than a maximum heat amount which can be stored in the heat storage element (13,23) minus the smallest heat amount greater than zero which the heat pump (11) can deliver over a certain time,
and wherein Q_{HP} is the heat rate delivered by the heat pump (11) in an operating mode with maximum COP,
wherein further the heat storage element (13, 23) in the "supply heat" operating mode supplies heat to the heat medium circuit (15),
in the "standby" mode neither supplies nor draws heat from the heat medium circuit (15) and in the "store heat" mode draws heat from the heat medium circuit (15),
and wherein the heat pump (11) in the "heating optimal" mode operates at a performance which has a maximum COP, in the "maintain operating mode" maintains its current operation and in the "standby" mode is inoperational.

8. Method for operating a heat pump system according to any of the preceding claims,
wherein the control element (14) performs the steps of determining a current performance of the heat pump (11), comparing the current performance to a stored performance and choosing an operating mode of the heat pump (11) and an operating mode of the heat storage element (13,23) according to a result of the comparing of the current performance to the stored performance at predetermined time intervals.

9. Heat pump system, comprising
a heat pump (11),
at least one heating element (121,122),
a heat storage element (13,23),
a heat medium circuit (15) connecting the heat pump (11), the at least one heating element (121, 122), and the heat storage element (13, 23), and
a control element (14),
the control element (14) being configured to determine a current performance of the heat pump (11),
to compare the current performance to a stored performance and choose an operating mode of the heat pump (11) and the heat storage element (13,23) according to a result of the comparing of the current performance to the stored performance, and
to store the current performance as a new stored performance if the current performance differs from the stored performance by an amount larger than the predetermined threshold.

10. Heat pump system according to claim 9, wherein the heat storage element (13,23) comprises a phase change material, PCM, or is a water based thermal storage.

11. Heat pump system according to the preceding claim, wherein the heat pump system is configured to perform a method for operating a heat pump system according to any of claims 2 to 8.

## Patentansprüche

1. Verfahren zum Betreiben eines Wärmepumpensystems,
wobei das Wärmepumpensystem (1) umfasst:
eine Wärmepumpe (11),
mindestens ein Heizelement (121, 122),
ein Wärmespeicherelement (13, 23),
ein Steuerelement (14), und
einen Wärmeträgerkreislauf (15), der die Wärmepumpe (11), das mindestens eine Heizelement (121, 122) und das Wärmespeicherelement (13, 23) verbindet, wobei das Steuerelement (14) eine aktuelle Leistung der Wärmepumpe (11) bestimmt,
die aktuelle Leistung mit einer gespeicherten Leistung vergleicht und einen Betriebsmodus der Wärmepumpe (11) und einen Betriebsmodus des Wärmespeicherelements (13, 23) entsprechend einem Ergebnis des Vergleichs der aktuellen Leistung mit der gespeicherten Leistung wählt, und wobei das Steuerelement (14) die aktuelle Leistung als eine neue gespeicherte Leistung speichert, wenn die aktuelle Leistung von der gespeicherten Leistung um einen Betrag abweicht, der größer als ein vorbestimmter Schwellenwert ist.

2. Verfahren zum Betreiben eines Wärmepumpensystems nach Anspruch 1, wobei das Steuerelement (14), wenn die aktuelle Leistung von der gespeicherten Leistung um einen Betrag abweicht, der größer als der vorbestimmte Schwellenwert ist, den Betriebsmodus der Wärmepumpe (11) anpasst, und wenn die aktuelle Leistung von der gespeicherten Leistung um einen Betrag abweicht, der kleiner als der vorbestimmte Schwellenwert ist, den aktuellen Betriebsmodus der Wärmepumpe (11) beibehält.

3. Verfahren zum Betreiben eines Wärmepumpensystems nach einem der Ansprüche 1 bis 2, wobei die aktuelle Leistung und die gespeicherte Leistung jeweils ein Leistungskoeffizient, COP, ist, und wobei die gespeicherte Leistung vorzugsweise ein mit der Wärmepumpe (11) maximal erreichbarer COP ist.

4. Verfahren zum Betreiben eines Wärmepumpensystems nach einem der Ansprüche 1 bis 3,
wobei das Steuerelement (14) ein aktuelles Speicherniveau des Wärmespeicherelements (13, 23) bestimmt und den Betriebsmodus weiterhin auf der Grundlage des aktuellen Speicherniveaus des Wärmespeicherelements (13, 23) wählt.

5. Verfahren zum Betreiben eines Wärmepumpensystems nach einem der vorhergehenden Ansprüche,
wobei das Steuerelement (14) einen Wärmebedarf (HD) bestimmt und den Betriebsmodus weiterhin auf der Grundlage des Wärmebedarfs wählt.

6. Verfahren zum Betrieb eines Wärmepumpensystems nach Anspruch 5,
wobei die Wärmepumpe (11) korrekt dimensioniert ist, und wobei das Steuerelement (14) den Betriebsmodus der Wärmepumpe (11) und des Wärmespeicherelements (13, 23) in Abhängigkeit von dem Speicherniveau des Wärmespeicherelements (13, 23) und dem Wärmebedarf gemäß der folgenden Tabelle wählt:
| **Aktuelles Speicherniveau des Wärmespeicherelements** | **Wärmebedarf** | **Betriebsmodus des Speicherelements** | **Betriebsmodus der Wärmepumpe** |
|---|---|---|---|
| voll | höher als Q_{HP} | Wärmezufuhr | Heizen optimal |
| voll | gleich Q_{HP} | Wärmezufuhr | Standby |
| voll | kleiner als Q_{HP} | Wärmezufuhr | Standby |
| voll | nicht vorhanden | Standby | Standby |
| teilweise gefüllt | höher als Q_{HP} | Wärmezufuhr | Betriebsmodus beibehalten |
| teilweise gefüllt | gleich Q_{HP} | Standby | Heizen optimal |
| teilweise gefüllt | kleiner als Q_{HP} | Wärme speichern | Heizen optimal |
| teilweise gefüllt | nicht vorhanden | Wärme speichern | Heizen optimal |
| leer | höher als Q_{HP} | Standby | Betriebsmodus beibehalten |
| leer | gleich Q_{HP} | Standby | Betriebsmodus beibehalten |
| leer | kleiner als Q_{HP} | Wärme speichern | Heizen optimal |
| leer | nicht vorhanden | Wärme speichern | Heizen optimal |
wobei das Wärmespeicherelement (13, 23) als voll gilt, wenn es eine Wärmemenge enthält, die größer ist als eine maximale Wärmemenge, die in dem Wärmespeicherelement (13, 23) gespeichert werden kann, abzüglich der kleinsten Wärmemenge, die größer als Null ist und die die Wärmepumpe (11) über eine bestimmte Zeit liefern kann,
und wobei Q_{HP} die von der Wärmepumpe (11) in einem Betriebsmodus mit maximalem COP gelieferte Wärmemenge ist,
wobei ferner das Wärmespeicherelement (13, 23) in dem Betriebsmodus "Wärmezufuhr" dem Wärmeträgerkreislauf (15) Wärme zuführt, in der Betriebsart "Standby" dem Wärmeträgerkreislauf (15) weder Wärme zuführt noch entnimmt und in der Betriebsart "Wärme speichern" dem Wärmeträgerkreislauf (15) Wärme entnimmt,
und wobei die Wärmepumpe (11) in der Betriebsart "Heizen optimal" mit einer Leistung arbeitet, die einen maximalen COP aufweist, in der Betriebsart "Betriebsmodus beibehalten" ihren aktuellen Betrieb beibehält und in der Betriebsart "Standby" nicht in Betrieb ist.

7. Verfahren zum Betrieb eines Wärmepumpensystems nach Anspruch 5,
wobei die Wärmepumpe (11) überdimensioniert ist, und wobei das Steuerelement (14) den Betriebsmodus der Wärmepumpe (11) und des Wärmespeicherelements (13, 23) in Abhängigkeit von dem Speicherniveau des Wärmespeicherelements (13, 23) und dem Wärmebedarf gemäß der folgenden Tabelle wählt:
| **Aktuelles Speicherniveau des Wärmespeicherelements** | **Wärmebedarf** | **Betriebsmodus des Speicherelements** | **Betriebsmodus der Wärmepumpe** |
|---|---|---|---|
| voll | höher als Q_{HP} | Wärmezufuhr | Heizen optimal |
| voll | gleich Q_{HP} | Wärmezufuhr | Standby |
| voll | kleiner als Q_{HP} | Wärmezufuhr | Standby |
| voll | nicht vorhanden | Standby | Standby |
| teilweise gefüllt | höher als Q_{HP} | Wärmezufuhr | Heizen optimal |
| teilweise gefüllt | gleich Q_{HP} | Standby | Heizen optimal |
| teilweise gefüllt | kleiner als Q_{HP} | Wärme speichern | Heizen optimal |
| teilweise gefüllt | nicht vorhanden | Wärme speichern | Heizen optimal |
| leer | höher als Q_{HP} | Standby | Betriebsmodus beibehalten |
| leer | gleich Q_{HP} | Standby | Heizen optimal |
| leer | kleiner als Q_{HP} | Wärme speichern | Heizen optimal |
| leer | nicht vorhanden | Wärme speichern | Heizen optimal |
wobei das Wärmespeicherelement (13, 23) als voll gilt, wenn es eine Wärmemenge enthält, die größer ist als eine maximale Wärmemenge, die in dem Wärmespeicherelement (13, 23) gespeichert werden kann, abzüglich der kleinsten Wärmemenge, die größer als Null ist und die die Wärmepumpe (11) über eine bestimmte Zeit liefern kann,
und wobei Q_{HP} die von der Wärmepumpe (11) in einem Betriebsmodus mit maximalem COP gelieferte Wärmemenge ist,
wobei ferner das Wärmespeicherelement (13, 23) in dem Betriebsmodus "Wärmezufuhr" dem Wärmeträgerkreislauf (15) Wärme zuführt, in der Betriebsart "Standby" dem Wärmeträgerkreislauf (15) weder Wärme zuführt noch entnimmt und in der Betriebsart "Wärme speichern" dem Wärmeträgerkreislauf (15) Wärme entnimmt,
und wobei die Wärmepumpe (11) in der Betriebsart "Heizen optimal" mit einer Leistung arbeitet, die einen maximalen COP aufweist, in der Betriebsart "Betriebsmodus beibehalten" ihren aktuellen Betrieb beibehält und in der Betriebsart "Standby" nicht in Betrieb ist.

8. Verfahren zum Betreiben eines Wärmepumpensystems nach einem der vorhergehenden Ansprüche,
wobei das Steuerelement (14) die Schritte des Bestimmens einer aktuellen Leistung der Wärmepumpe (11), des Vergleichens der aktuellen Leistung mit einer gespeicherten Leistung und des Auswählens eines Betriebsmodus der Wärmepumpe (11) und eines Betriebsmodus des Wärmespeicherelements (13, 23) gemäß einem Ergebnis des Vergleichs der aktuellen Leistung mit der gespeicherten Leistung in vorbestimmten Zeitintervallen durchführt.

9. Wärmepumpensystem, umfassend:
eine Wärmepumpe (11),
mindestens ein Heizelement (121, 122),
ein Wärmespeicherelement (13, 23),
einen Wärmeträgerkreislauf (15), der die Wärmepumpe (11), das mindestens eine Heizelement (121, 122) und das Wärmespeicherelement (13, 23) verbindet, und
ein Steuerelement (14),
wobei das Steuerelement (14) eingerichtet ist, eine aktuelle Leistung der Wärmepumpe (11) zu bestimmen,
die aktuelle Leistung mit einer gespeicherten Leistung zu vergleichen und einen Betriebsmodus der Wärmepumpe (11) und des Wärmespeicherelements (13, 23) entsprechend einem Ergebnis des Vergleichs der aktuellen Leistung mit der gespeicherten Leistung zu wählen, und
die aktuelle Leistung als eine neue gespeicherte Leistung zu speichern, wenn die aktuelle Leistung von der gespeicherten Leistung um einen Betrag abweicht, der größer ist als der vorbestimmte Schwellenwert.

10. Wärmepumpensystem nach Anspruch 9, wobei das Wärmespeicherelement (13, 23) ein Phasenwechselmaterial, PCM, umfasst oder ein thermischer Speicher auf Wasserbasis ist.

11. Wärmepumpensystem nach dem vorhergehenden Anspruch, wobei das Wärmepumpensystem eingerichtet ist, ein Verfahren zum Betreiben eines Wärmepumpensystems nach einem der Ansprüche 2 bis 8 durchzuführen.

## Revendications

1. Procédé destiné à actionner un système de pompe à chaleur,
le système de pompe à chaleur (1), comprenant
une pompe à chaleur (11),
au moins un élément chauffant (121, 122),
un élément de stockage de la chaleur (13, 23),
un élément de commande (14), et
un circuit thermique intermédiaire (15), qui connecte la pompe à chaleur (11), l'un au moins des éléments chauffants (121, 122), et l'élément de stockage de la chaleur (13, 23), dans lequel l'élément de commande (14) détermine les performances actuelles de la pompe à chaleur (11),
compare les performances actuelles à des performances stockées, et choisit un mode de fonctionnement de la pompe à chaleur (11) et un mode de fonctionnement de l'élément de stockage de la chaleur (13, 23) selon le résultat de la comparaison des performances actuelles aux performances stockées, et dans lequel l'élément de commande (14) stocke les performances actuelles en tant que nouvelles performances stockées si les performances actuelles diffèrent des performances stockées d'une quantité supérieure à un seuil prédéterminé.

2. Procédé destiné à actionner un système de pompe à chaleur selon la revendication 1, dans lequel l'élément de commande (14) ajuste, si les performances actuelles diffèrent des performances stockées d'une quantité supérieure au seuil prédéterminé, le mode de fonctionnement de la pompe à chaleur (11), et maintient, si les performances actuelles diffèrent des performances stockées d'une quantité inférieure au seuil prédéterminé, le mode de fonctionnement actuel de la pompe à chaleur (11).

3. Procédé destiné à actionner un système de pompe à chaleur selon la revendication 1 ou 2, dans lequel les performances actuelles et les performances stockées sont chacune un coefficient de performances, COP, et dans lequel les performances stockées sont de préférence un COP maximum atteignable avec la pompe à chaleur (11).

4. Procédé destiné à actionner un système de pompe à chaleur selon l'une quelconque des revendications 1 à 3,
dans lequel l'élément de commande (14) détermine le niveau de stockage actuel de l'élément de stockage de la chaleur (13, 23), et choisit le mode de fonctionnement sur la base en outre du niveau de stockage actuel de l'élément de stockage de la chaleur (13, 23).

5. Procédé destiné à actionner un système de pompe à chaleur selon l'une quelconque des revendications précédentes,
dans lequel l'élément de commande (14) détermine une demande de chaleur (HD) et choisit le mode de fonctionnement sur la base en outre de la demande de chaleur.

6. Procédé destiné à actionner un système de pompe à chaleur selon la revendication 5,
dans lequel la pompe à chaleur (11) est idéalement dimensionnée, et dans lequel l'élément de commande (14) choisit le mode de fonctionnement de la pompe à chaleur (11) et de l'élément de stockage de la chaleur (13, 23) selon le niveau de stockage de l'élément de stockage de la chaleur (13, 23) et de la demande de chaleur selon le tableau suivant :
| **Niveau de stockage actuel de l'élément de stockage de la chaleur** | **Demande en chaleur** | **mode de fonctionnement de l'élément de stockage** | **mode de fonctionnement de la pompe à chaleur** |
|---|---|---|---|
| plein | supérieure à Q_{HP} | fourniture dechaleur | chauffage optimal |
| plein | égale à Q_{HP} | fourniture de chaleur | attente |
| plein | inférieure à Q_{HP} | fourniture de chaleur | attente |
| plein | aucune | attente | attente |
| partiellement plein | supérieure à Q_{HP} | fourniture de chaleur | maintenir le mode de fonctionnement |
| partiellement plein | égale à Q_{HP} | attente | chauffage optimal |
| partiellement plein | inférieure à Q_{HP} | stockage de chaleur | chauffage optimal |
| partiellement plein | aucune | stockage de chaleur | chauffage optimal |
| épuisé | supérieure à Q_{HP} | attente | maintenir le mode de fonctionnement |
| épuisé | égale à Q_{HP} | attente | maintenir le mode de fonctionnement |
| épuisé | inférieure à Q_{HP} | stockage de chaleur | chauffage optimal |
| épuisé | aucune | stockage de chaleur | chauffage optimal |
dans lequel l'élément de stockage de la chaleur (13, 23) est considéré comme étant plein s'il contient une quantité de chaleur supérieure à une quantité de chaleur maximum qui peut être stockée dans l'élément de stockage de la chaleur (13, 23) moins la plus petite quantité de chaleur supérieure à zéro que peut fournir la pompe à chaleur (11) pendant un certain temps,
et dans lequel Q_{HP} est le rendement thermique fourni par la pompe à chaleur (11) dans un mode de fonctionnement avec un COP maximum,
dans lequel en outre l'élément de stockage de la chaleur (13, 23), dans le mode de fonctionnement « fournir de la chaleur » fournit la chaleur au circuit thermique intermédiaire (15), dans le mode de fonctionnement « attente » ne fournit ni ne retire de la chaleur du circuit thermique intermédiaire (15), et dans le mode « stocker de la chaleur » retire de la chaleur du circuit thermique intermédiaire (15),
et dans lequel la pompe à chaleur (11), dans le mode de fonctionnement « chauffage optimal » fonctionne selon les performances qui présentent un COP maximum, dans le « mode de fonctionnement maintien » maintient son fonctionnement en cours, et dans le mode « attente » est non opérationnelle.

7. Procédé destiné à actionner un système de pompe à chaleur selon la revendication 5,
dans lequel la pompe à chaleur (11) est surdimensionnée et dans lequel l'élément de commande (14) choisit le mode de fonctionnement de la pompe à chaleur (11) et de l'élément de stockage de la chaleur (13, 23) selon le niveau de stockage de l'élément de stockage de la chaleur (13, 23) et la demande de chaleur selon le tableau suivant :
| **Niveau de stockage actuel de l'élément de stockage de la chaleur** | **Demande en chaleur** | **mode de fonctionnement de l'élément de stockage** | **mode de fonctionnement de la pompe à chaleur** |
|---|---|---|---|
| plein | supérieure à Q_{HP} | fourniture de chaleur | chauffage optimal |
| plein | égale à Q_{HP} | fourniture de chaleur | attente |
| plein | inférieure à Q_{HP} | fourniture de chaleur | attente |
| plein | aucune | attente | attente |
| partiellement plein | supérieure à Q_{HP} | fourniture de chaleur | chauffage optimal |
| partiellement plein | égale à Q_{HP} | attente | chauffage optimal |
| partiellement plein | inférieure à Q_{HP} | stockage de chaleur | chauffage optimal |
| partiellement plein | aucune | stockage de chaleur | chauffage optimal |
| épuisé | supérieure à Q_{HP} | attente | maintenir le mode de fonctionnement |
| épuisé | égale à Q_{HP} | attente | chauffage optimal |
| épuisé | inférieure à Q_{HP} | stockage de chaleur | chauffage optimal |
| épuisé | aucune | stockage de chaleur | chauffage optimal |
dans lequel l'élément de stockage de la chaleur (13, 23) est considéré comme étant plein s'il contient une quantité de chaleur supérieure à une quantité de chaleur maximum qui peut être stockée dans l'élément de stockage de la chaleur (13, 23) moins la plus petite quantité de chaleur supérieure à zéro que peut fournir la pompe à chaleur (11) pendant un certain temps,
et dans lequel Q_{HP} est le rendement thermique fourni par la pompe à chaleur (11) dans un mode de fonctionnement avec un COP maximum,
dans lequel en outre l'élément de stockage de la chaleur (13, 23), dans le mode de fonctionnement « fournir de la chaleur » fournit la chaleur au circuit thermique intermédiaire (15), dans le mode de fonctionnement « attente » ne fournit ni ne retire de la chaleur du circuit thermique intermédiaire (15), et dans le mode « stocker de la chaleur » retire de la chaleur du circuit thermique intermédiaire (15),
et dans lequel la pompe à chaleur (11), dans le mode de fonctionnement « chauffage optimal » fonctionne selon les performances qui présentent un COP maximum, dans le « mode de fonctionnement maintien » maintient son fonctionnement en cours, et dans le mode « attente » est non opérationnelle.

8. Procédé destiné à actionner un système de pompe à chaleur selon l'une quelconque des revendications précédentes,
dans lequel l'élément de commande (14) exécute les étapes consistant à déterminer les performances actuelles de la pompe à chaleur (11), à comparer les performances actuelles aux performances stockées, et à choisir un mode de fonctionnement de la pompe à chaleur (11) et un mode de fonctionnement de l'élément de stockage de la chaleur (13, 23) selon le résultat de la comparaison des performances actuelles aux performances stockées à des intervalles de temps prédéterminés.

9. Système de pompe à chaleur, comprenant
une pompe à chaleur (11),
au moins un élément chauffant (121, 122),
un élément de stockage de la chaleur (13, 23),
un circuit thermique intermédiaire (15) qui connecte la pompe à chaleur (11), l'un au moins des éléments chauffants (121, 122), et l'élément de stockage de la chaleur (13, 23), et
un élément de commande (14),
l'élément de commande (14) étant configuré afin de déterminer les performances actuelles de la pompe à chaleur (11),
comparer les performances actuelles aux performances stockées, et choisir un mode de fonctionnement de la pompe à chaleur (11) et de l'élément de stockage de la chaleur (13, 23), selon le résultat de la comparaison des performances actuelles aux performances stockées, et
stocker les performances actuelles en tant que nouvelles performances stockées si les performances actuelles diffèrent des performances stockées d'une quantité supérieure au seuil prédéterminé.

10. Système de pompe à chaleur selon la revendication 9, dans lequel l'élément de stockage de la chaleur (13, 23) comprend un matériau à changement de phase, PCM, ou est un stockage thermique à base d'eau.

11. Système de pompe à chaleur selon la revendication précédente, dans lequel le système de pompe à chaleur est configuré afin d'exécuter un procédé consistant à actionner un système de pompe à chaleur selon l'une quelconque des revendications 2 à 8.
